# EUROPEAN PATENT APPLICATION

(11) **EP 3 547 160 A1**
(43) Date of publication of application: **02.10.2019**
(21) Application number: 18164205.9
(22) Date of filing: 27.03.2018
(51) Int. Cl.: G06F 17/24, G06F 17/27, G06F 17/30, G09B 5/06, G09B 19/06

(54) **CREATION OF RICH CONTENT FROM TEXTUAL CONTENT**

(71) Applicant: Nokia Technologies Oy, 02610 Espoo (FI)
(72) Inventor: PADMANABHAN, Sowrirajan, 600091 Chennai (IN)
(74) Representative: Nokia EPO representatives

(57) **Abstract**

An example discloses an apparatus comprising a means providing textual content for output in an e-reader environment and a means providing metadata associated one or more portions of the textual content. The metadata may define rendering indications for the associated portion of the textual content. The apparatus may also comprise means for causing rendering of the one or more textual content portions into rich content format using the rendering indications in the metadata. Another example embodiment discloses an apparatus comprising means for automatically generating metadata associated with one or more portions of the textual content, the metadata defining rendering indications for the associated portion is to be rendered in a rich content format by an apparatus having an e-reader environment.

## Description

### Field

This disclosure relates to an apparatus and method for creating rich content from textual content. For example, the apparatus and method may relate to rendering video and/or audio content from textual data suitable for output in an e-reader environment.

### Background

The consumption of digital publications, such as so-called e-books, is very popular and such content can be displayed and navigated using a wide range of digital devices, including dedicated e-reader devices, smartphones, tablet computers and virtual assistant devices having displays. E-books comprise files consisting substantially of displayable text.

### Summary

An embodiment provides an apparatus comprising: means providing textual content for output in an e-reader environment; means receiving metadata associated with one or more portions of the textual content, the metadata defining rendering indications of the associated one or more portions of the textual content; and means for causing rendering of the one or more textual content portions into rich content format using at least the rendering indications in the metadata.

The apparatus may further comprise means for retrieving from a remote source one or more rich content models corresponding to the at least some of the metadata for use by the means for causing rendering.

The textual content may correspond to a document, book or other publication.

The metadata may not be viewable with the textual data when viewed in the e-reader environment.

The metadata may describe attributes of one or more features mentioned in the textual data, the feature attributes not being mentioned in the textual data, such that the features, when rendered, have said attributes.

The metadata may describe feature attributes of one or more of characters, objects, locations, scenery, weather, background and actions mentioned in the textual data.

The apparatus may further comprise means for automatically determining a plurality of scenes in the textual content based on the metadata, and wherein the means for causing rendering causes rendering of one or more scenes for presentation to a display of the apparatus.

The apparatus may further comprise means arranged to permit user modification of the metadata for one or more of the determined scenes by means of user input.

The user modification means may be configured to present a user interface on the apparatus display, the interface enabling modification by means of receiving user selection of one or more features mentioned in the textual data and to modify at least some of the corresponding metadata with personalised metadata so as to provide personalised rich content for the scene when caused to be rendered.

The user interface may be presented on the apparatus display during display of the rendered rich content for each scene.

The apparatus may further comprise means for creating one or more selectable characters or descriptors by providing captured video and/or audio data to a means for generating a rich content format model from the captured data and for generating corresponding personalised metadata.

The one or more rich content format models may comprise one or both of video and audio content. One or both of the video and audio content may be virtual reality content for output to a virtual reality device.

The apparatus may further comprise: means for automatically generating metadata associated with one or more portions of the textual content, the metadata defining rendering indications of the associated portion to be rendered in a rich content format by an apparatus having an e-reader environment.

The means for automatically generating the metadata may be arranged to split the textual data into a plurality of scene portions.

The means for automatically generating the metadata may be arranged to split the textual data into a plurality of scene portions by means of one or more of the following rules: different paragraphs represent different scenes; a time or date change mentioned in the textual data represents the start of a new scene; a change in character mentioned in the textual data represents the start of a new scene; a change in location mentioned in the textual data represents the start of a new scene.

The apparatus may further comprise means arranged to permit enrichment of the automatically generated metadata by a user by adding metadata to, or modifying the automatically generated metadata.

At least some of the metadata may correspond with one or more rich content format models for use by the rendering apparatus in producing a rich content format version of the textual content.

The means above may comprise at least one processor; and at least one memory including computer program code, the at least one memory and computer program code configured to, with the at least one processor, cause the performance of the apparatus. The means may alternatively, or additionally, comprise other hardware, software, firmware or a combination thereof.

Another embodiment provides a method comprising: providing textual content for output in an e-reader environment; receiving metadata associated with one or more portions of the textual content, the metadata defining rendering indications of the one or more associated portions of the textual content; and causing rendering the one or more textual content portions into rich content format using the rendering indications in the metadata.

Another embodiment provides a computer program, optionally stored on a non-transitory computer readable medium program which, when executed by one or more processors of a data processing apparatus, causes the data processing apparatus to carry out a method, comprising providing textual content for output in an e-reader environment; receiving metadata associated with one or more portions of the textual content, the metadata defining rendering indications of the one or more associated portions of the textual content; and causing rendering the one or more textual content portions into rich content format using the rendering indications in the metadata.

Another embodiment provides an apparatus comprising at least one processor; and at least one memory including computer program code, the at least one memory and computer program code configured to, with the at least one processor, cause the apparatus to perform: providing textual content for output in an e-reader environment; receiving metadata associated with one or more portions of the textual content, the metadata defining rendering indications of the one or more associated portions of the textual content; and causing rendering the one or more textual content portions into rich content format using the rendering indications in the metadata.

Another embodiment provides a non-transitory computer-readable medium having stored thereon computer-readable code, which, when executed by at least one processor, causes the at least one processor to perform a method, comprising: providing textual content for output in an e-reader environment; receiving metadata associated with one or more portions of the textual content, the metadata defining rendering indications of the one or more associated portions of the textual content; and causing rendering the one or more textual content portions into rich content format using the rendering indications in the metadata.

### Brief Description of Drawings

Embodiments will now be described, by way of non-limiting example, with reference to the accompanying drawings, in which:
FIG. 1 is a front plan view of an example e-reader terminal;
FIG. 2 is a schematic diagram showing the FIG. 1 e-reader terminal connected to an E-library via a network;
FIG. 3 is a schematic diagram showing the FIG. 1 e-reader terminal connected to an E-library via a network and also to another user terminal and server, according to an example embodiment;
FIG. 4 is a schematic diagram of components of one or more of the E-reader or user terminal shown in FIG. 3;
FIG. 5 is a flow diagram showing processing operations for generating and providing first metadata to a rendering apparatus, according to an example embodiment;
FIG. 6 is a flow diagram showing processing operations for generating and providing first metadata to a rendering apparatus, according to another example embodiment;
FIG. 7 is a flow diagram showing processing operations for causing rendering of one or more textual portions into a rich content format using metadata, according to another example embodiment;
FIG. 8A shows a portion of textual content, during a parsing operation, according to an example embodiment;
FIG. 8B shows examples of generated metadata from the parsed FIG. 8A textual content, according to an example embodiment;
FIG. 8C shows the FIG. 8B metadata organised into first and second scenes, according to an example embodiment;
FIG. 8D shows a plurality of representative models that may correspond to the first metadata for one of the FIG. 8C scenes;
FIG. 9 is a schematic diagram showing functional modules of a metadata generating module, according to an example embodiment; and
FIG. 10 is a schematic diagram showing functional modules of a client-end module, according to an example embodiment.

### Detailed Description

In the description and drawings, like reference numerals refer to like elements throughout.

Examples herein relate to the rendering of textual (alternatively "text") content into rich content based on metadata.

Textual content may be data representing text that may comprise, for example, an e-book or other digital publication such as an e-magazine or e-journal. The text may for example be alphanumeric text, or text that uses any other type of alphabet or character set, for example Arabic or Chinese script. Rich data in this context may refer to non-textual, presentable content related to the text, for example one or more of visual and audio representations of the textual content, such as a video and/or audio representation of an e-book text. The video representation may be animated such that it gives the impression of movement over successive frames.

E-books are a relatively popular way for users to read books using a suitable terminal such as a dedicated e-reader terminal or on a more general-purpose computer terminal such as on a Personal Computer (PC) or a smartphone. Digital assistant terminals incorporating display screens are also usable to display and navigate e-books and similar documents in data form.

E-books and similar forms of textual content are typically downloaded from a remote server, known as an e-library, from which users may browse and search available content titles and request the download. Sometimes the user is required to pay for the e-book prior to download, in which case an account is usually required with payment information pre-registered or prompted at the time of purchase. E-books may be provided in data files having a number of possible formats, including, but not limited to, the EPUB format, which is based on XML.

It would be advantageous to provide, and for users to be able to consume, an enriched version of textual content, such as a video and/or audio version of textual content. This may be means of creating a playable video and/or audio version of the narrative or story described in the e-book text. This may be useful for users who for a range of reasons may not be able to read the text; for example younger users or users in the process of learning the particular language of the text. Other examples may include users with sight problems that make reading the text difficult. Users may simply wish to consume the book in an alternative way, perhaps visualising a particular character or a scene within the e-book. Users may wish to personalise the e-book in some way.

Embodiments herein will focus on the rendering of video versions of e-books but it should be appreciated that rendering to other rich content formats, such as audio or a combination of video and audio is also possible without deviating from methods and systems disclosed herein. Further, the rich content may be three-dimensional video and/or spatial audio data, and may even comprise virtual reality data for rendering to a virtual reality headset or other virtual reality user terminal. In some cases, the rich content may enable user interaction with the rendered scene. For example, some embodiments may enable users, e.g. the author and/or end users, to tailor, modify and/or personalise aspects of the generated rich content.

In overview, embodiments comprise providing metadata associated with textual content, the latter being suitable for output in an e-reader environment. An e-reader environment is any displayable user-environment through which users are presented with, and can browse, text at the user terminal. An e-reader environment can be provided in a dedicated e-reader, or in non-dedicated devices such as computers, smartphones and tablet computers. An e-reader environment may be presented on a two-dimensional electronic display or in three-dimensions, for example through a virtual reality or similar electronic display device. The metadata is typically not presented and may not be accessible in the e-reader environment, even through normal interaction. The metadata may therefore be considered hidden data, at least to the conventional reader. The metadata may be transportable with the e-book data and may be provided in single file or multiple associated or linked files.

For example, the metadata may correspond to one or more rich content models such as one or more animated or adaptable video models stored at a remote server. An adaptable video model is one that can be modified, for example by removing, replacing or adding metadata. Animation of the video models may be performed as part of the rendering operation at the user terminal or at another terminal from which the user terminal receives the animated model, for example using streaming transmission. The video models may comprise one or more of people, animals, objects, scenery, locations, clothing and costumes, to give some examples. The animating may comprise imparting one or more motion characteristics on the one or more models, and may be determined based on other parts of the metadata, e.g. making a person walk, run and/or speak text indicated in quotation marks.

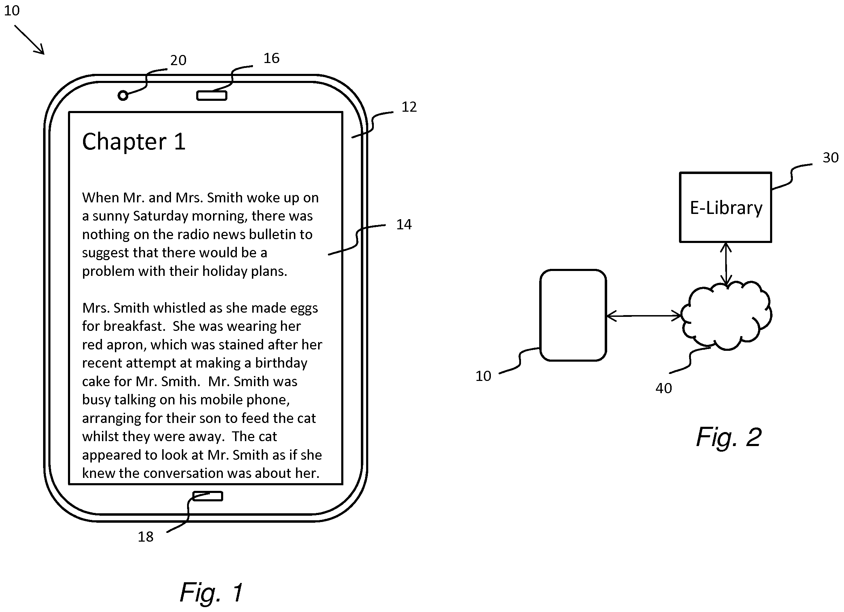

FIG. 1 for example shows an example first user terminal 10, which may be an e-reader terminal, a tablet computer, a personal computer (PC), a digital assistant or other type of computer terminal for providing an e-reader environment. The first user terminal 10 may comprise a body 12 having a display screen 14. The display screen 14 may be of any suitable type and for example may comprise a light emitting diode (LED) screen, a liquid crystal display (LCD) screen, a thin-film transistor (TFT) screen or a plasma screen. The display screen 14 is displaying in FIG. 1 a portion of text from an e-book in an e-reader environment. The first user terminal 10 may also comprise one or more speakers 16, one or more microphones 18 and one or more cameras 20. The first user terminal 10 may comprise a communications interface, such as a cellular (3G/4G) transceiver or other wireless interface (e.g. a WiFi transceiver) to permit connection to a data communications network such as the Internet for the downloading of data from a remote source, such as an e-library.

FIG. 2 shows the FIG. 1 first user terminal 10 connected to an internet protocol (IP) network 40 such as the Internet. The connection may be by means of conventional wired or wireless communications and the network may alternatively be a communication network that uses protocols other than IP. Also connected to the IP network 40 is an e-library 30 from which one or more e-books may be browsed, searched for and selected for downloading. In some embodiments, the one or more e-books may be downloaded as a file comprising data representing textual data for output through an e-reader environment.

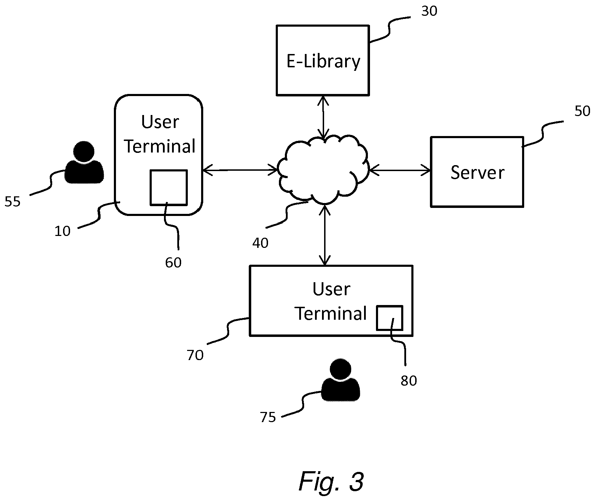

FIG. 3 is another network diagram, similar to FIG. 2, in which there is further provided a server computer 50 and a second user terminal 70 connected to the IP network 40.

In this example embodiment, the first user terminal 10 further comprises a client-end module 60, which may be provided as software, hardware or a combination thereof, for at least rendering textual data to video and/or audio data, based on metadata associated with the textual data, for display using the display screen 14. It is assumed that the first user terminal 10 is associated with a first user, typically someone wishing to consume the e-book by reading the textual data version or viewing an enriched version in video and/or listening in audio.

The server computer 50 may comprise a means for providing one or more data models corresponding to metadata associated with the textual data, which data models may be used in rendering a video and/or audio format version of the e-book text, as will be described later on. The functions of the server computer 50 which are described below may be performed using two or more server computers 50 in some embodiments, which are possibly remote from one another. For example, a first set of data models may be stored on a first server computer 50 and a second set of data models may be stored on a different server computer. The term "server computer" is not intended to be limiting to any particular form of computer. The functions of the server computer 50 may in some embodiments be stored on one or more computers associated with users, for example one or more personal computers, tablet computers, digital assistants and smartphones.

The second user terminal 70 may be any form of computer terminal. The second user terminal 70 may be associated with another user, for example an author of an e-book stored at the e-library 30. The second user terminal 70 may for example be an e-reader terminal, a tablet computer, a personal computer (PC), a digital assistant or other type of computer terminal.

In an example embodiment, the second user terminal 70 may further comprise a metadata generating module 80, which may be provided as software, hardware or a combination thereof, for generating metadata from the textual data of a particular e-book. At least part of generating the metadata may be performed automatically, as will be explained below. Further, the metadata generating module 80 may further permit manual creation of metadata and/or modification of previous, automatically-generated metadata, for example to add, remove or replace previous metadata. Further, the metadata generating module 80 may further permit rendering of the textual data to video data, based on current metadata associated with the textual data, for display using a display screen of the second user terminal 70. This may be to permit viewing of video data derived from the current metadata, which may prompt or guide the user to make modifications based on the current output.

In some embodiments, the metadata generating module 80 may be provided at an alternative user terminal, or indeed any computer terminal connected to the IP network 40. For example, the metadata generating module 80 may be provided at the first user terminal 10.

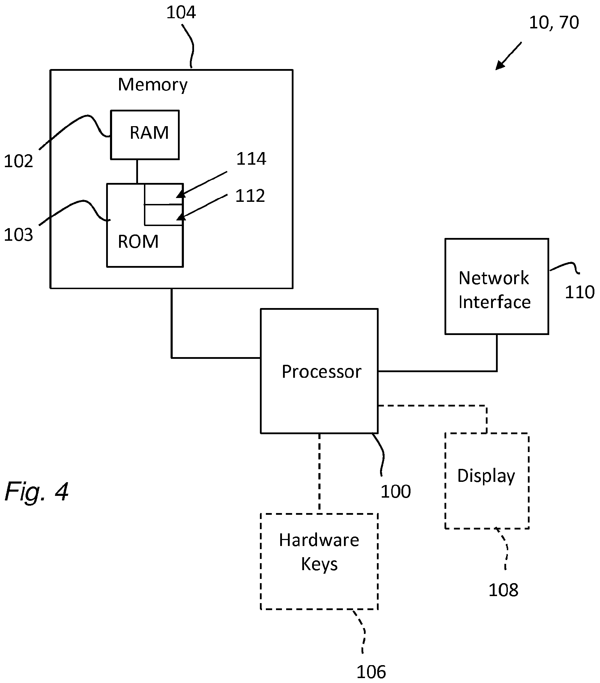

FIG. 4 is a schematic diagram of components of either or both of the first and second user terminals 10, 70. For simplicity, we will assume that FIG. 4 shows components of the second user terminal 70. The second user terminal 70 may have a processor 100, a memory 104 closely coupled to the processor and comprised of a RAM 102 and ROM 103, hardware keys 106 and a display 108. The second user terminal 70 may comprise one or more network interfaces 110 for connection to a network, such as the IP network 50, the one or more network interfaces for example being a modem which may be fir wired or wireless data communications.

The processor 100 is connected to each of the other components in order to control operation thereof.

The memory 104 may comprise a non-volatile memory such as read only memory, a hard disk drive (HDD) or a solid state drive (SSD). The ROM 103 stores, amongst other things, an operating system 112 and may store software applications 114. The RAM 102 is used by the controller 100 for the temporary storage of data. The operating system 112 may contain code which, when executed by the processor 100 in conjunction with the RAM 102, controls operation of each of the hardware components of the second user terminal 70.

The processor 100 may take any suitable form. For instance, it may be a microcontroller, plural microcontrollers, a processor, or plural processors.

In some embodiments, the second user terminal 70 may also be associated with external software applications. These may be applications stored on a remote server device and may run partly or exclusively on the remote server device. These applications may be termed cloud-hosted applications. The second user terminal 70 may be in communication with the remote server device in order to utilize the software application stored there.

One of said software applications 114 may comprise the metadata generating module 80 shown in FIG. 3.

In overview, the metadata generating module 80 generates metadata for association with an e-book. Example methods by which this may be performed will be described below. The e-book with its associated metadata may then be provided to an end user, such as the end user 55 indicated in FIG. 3. The metadata may for example be bundled with the displayable e-book text and transmitted to the first user terminal 10 whereby the client-end module 60 causes rendering of the e-book into a rich video and/or audio format using the metadata. As indicated previously, this may involve retrieving one or more rich data models from the server 50 based on the metadata prior to, or during, the rendering process. As also indicated previously, the client-end module 60 may also be used to create and/or modify metadata.

The metadata defines rendering indications associated with one or more portions of the e-book text. Such rendering indications may comprise any form of metadata usable by a rendering means to render rich content. For example, such rendering indications may define how, what, where, when and why video and/or audio content is rendered. For example, one or more rendering indications may define one or more video and/or models to retrieve, where the models are stored, where and when they are to be rendered and/or in response to what action.

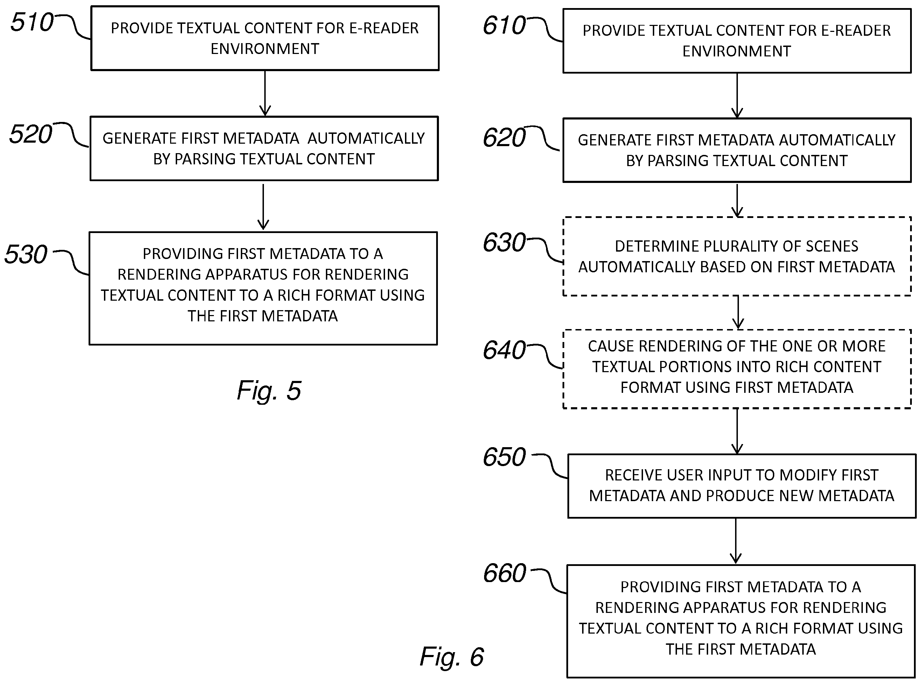

FIG. 5 is a flow diagram showing processing operations that may be performed in software, hardware, firmware, or a combination thereof to provide the metadata generating module 80, in this case provided at the second user terminal 70 associated with an e-book author 75. It will be appreciated that certain operations may be added, removed or re-ordered. The number of operations is not necessarily indicative of order of processing.

A first operation 510 may comprise providing textual content for an e-reader environment. In examples, the textual content is text for an e-reader environment. The provided textual content may be received from any location, for example the e-library 30.

A second operation 520 may comprise generating first metadata automatically by parsing the textual content. The automatic parsing may follow one or more programmed rules to be described below.

A third operation 530 may comprise providing first metadata to a rendering apparatus for rendering textual content to a rich format using the first metadata. The rendering apparatus may for example be the first user terminal 10 having the associated client-end module 60 for rendering based on said first metadata.

Generating the first metadata automatically by parsing textual content may involve the following operations, for example. Parsing may be done using one or more rules provided as part of the metadata generating module 80.

For example, one or more characters in the e-book text may be identified. This may be by means of using a name parser, such as python-nameparser, which may compare individual words in the text with a stored dictionary of names. This may alternatively or additionally comprise identifying proper nouns having a capitalised first letter, and possibly then comparing with a stored dictionary of names.

For example, one or more places or locations in the e-book text may be identified. This may be performed using a place or location parser, for example using something similar to python-nameparser, which may compare individual words in the text with a stored dictionary of place or location names. This may alternatively or additionally comprise identifying proper nouns having a capitalised first letter, and/or found in a stored dictionary of place or location names. Examples include "London", "New York", "bedroom", "kitchen", "shopping mall" etc.

For example, one or more times or timelines in the e-book text may be identified. This may be performed using a timeline parser, for example using something similar to python-nameparser, which may compare individual words in the text with a stored dictionary of time-related labels, such as days (e.g. Monday - Sunday), dates (e.g. anything in the format dd/mm; dd/mm/yy or similar) or abbreviated labels such as months or seasons (e.g. September 2015; summer of 2017 or similar.)

For example, one or more weather descriptors in the e-book text may be identified. This may be by means of using a descriptor parser, for example using something similar to python-nameparser, which may compare individual words in the text with a stored dictionary of weather-related labels, such as "sunny", "cloudy", "raining", "gloomy" etc.

For example, one or more costume descriptors in the e-book text may be identified. This may be by means of using another descriptor parser, for example using something similar to python-nameparser, which may compare individual words in the text with a stored dictionary of costume-related labels, such as "blue jeans", "red apron", "black shoes", etc.

In other embodiments, the use of natural-language processing (NLP) may be employed, for example in association with a machine-learning model and/or artificial neural network, trained to identify one or more categories of word from a portion of text and to categorise the word as, for example, a character name, location, time or timeline, weather descriptor and/or costume descriptor.

The first metadata may be generated in such a way as to correspond at least partly to one or more rich content models stored, for example, in the server 50.

The set of first metadata may be generated for logical portions of the e-book text. For example, the e-book text may be divided into paragraphs, chapters or other sections, and a set of first metadata generated for each in turn.

Having generated the first metadata, in an example embodiment, the metadata may be provided with the e-book text to the first user terminal 10. At the first user terminal 10, the client-end module 60 may then retrieve one or more rich content models from the server 50 to render a basic animated, e.g. video version, of the text using one or more models corresponding to the metadata, e.g. a character at a location on a particular date, wearing a particular costume and experiencing certain weather.

In some embodiments, the remaining text, not parsed as part of the first metadata generation, may undergo further parsing. For example, anything within quotation marks "" may be considered speech which is converted into audio at the client-end module 60 or which is displayed with a speech bubble image when rendered.

In some embodiments, refinement of the first metadata may be performed, for example by the author, prior to sending to the first user terminal 10.

FIG. 6 is a flow diagram showing processing operations of another example embodiment that may be performed in software, hardware, firmware, or a combination thereof to provide the metadata generating module 80. It will be appreciated that certain operations may be added, removed or re-ordered. The number of operations is not necessarily indicative of order of processing.

A first operation 610 may comprise providing textual content for an e-reader environment. In examples, the textual content is text for an e-reader environment. The provided textual content may be received from any location, for example the e-library 30.

A second operation 620 may comprise generating first metadata automatically by parsing the textual content. The automatic parsing may follow one or more programmed rules, for example any of those described above in relation to operation 520.

A third operation 630, which is optional, may comprise determining a plurality of scenes automatically based on the first metadata. This determination may follow one or more programmed rules such as those described below. In some embodiments, scene determination may be performed manually, for example to modify the automatic assignment of scenes.

A fourth operation 640, which is optional, may comprise causing rendering of the one or more textual portions into rich content format using the first metadata. This may be to permit a user associated with the second user terminal 70, e.g. the author or another entity 75, to preview the generated rich content format of the textual content format data, e.g. the video version as generated based on the first metadata.

A fifth operation 650 may comprise receiving user input to modify the first metadata and produce therefrom new metadata. The modification may comprise one or more of adding to, removing and replacing one or more portions of the first metadata.

A sixth operation 660 may comprise providing the new metadata to a rendering apparatus for rendering textual content to a rich format using the new metadata. The rendering apparatus may for example be the first user terminal 10 having the associated client-end module 60 for rendering based on said new metadata.

This example embodiment therefore permits the author or some other person or entity 75, to modify the first metadata, for example to correct any errors perceivable from the automatic parsing and/or to fill-in any missing information. The modification can be performed by any person or entity, which may be a human or an automated proofing computer, with access to the metadata prior to provision to the device or terminal associated with the end user or reader. Such a person or entity 75 may be referred to as a "proofing entity."

The modified metadata may describe attributes of one or more features mentioned in the textual data. The resulting feature attributes may not be mentioned in the previous textual data. The features, when rendered, may have said attributes. For example, the metadata may describe feature attributes of one or more of characters, objects, locations, scenery, weather, background and actions mentioned in the textual data. For example, for a particular character, one or more attributes of that character's appearance, size or facial expression may be included in the modified metadata. For example, for a particular location, one or more attributes relating to what is occurring in that location or whether it is daytime or night time may be included in the modified metadata.

The third operation 630 may comprise determining the plurality of scenes automatically, by, for example, following one or more of the following set of rules based on the first metadata:
(i) every paragraph, chapter, or other literary division of the e-book text is a distinct scene;
(ii) every date or time change corresponds to the end of a scene (and the start of a new one);
(iii) every place change corresponds to the end of a scene (and the start of a new one);
(iv) every new character appearing in a scene corresponds to the start of a new scene;

For example, the proofing entity 75 may additionally, through user input, break-up the e-book text into further scenes and/or may combine two or more scenes broken-up automatically by the rules into a single scene.

The fourth operation 640 may permit a rendered preview of the first metadata (albeit possibly modified by the scene divisions) to the proofing entity 75. This may be by means of pulling one or more rich content models from the server 50 corresponding to the first metadata and rendering them using a rendering engine. This may be performed on a scene-by-scene basis.

The fifth operation 650 may permit the proofing entity 75 to modify the first metadata. For example, this may be by means of a user interface which shows for each scene the first metadata, possibly at the same time as the associated text, enabling selection and modification thereof. For example, this may be by means of a user interface displayed at the same time as the rendered preview of each scene, enabling selection and modification of certain metadata. The particular scene may then be re-rendered following the modification of metadata so that the proofing entity 75 can preview the effect of the modified metadata.

Modification of the first metadata may for example be for corrective purposes. For example, if the first metadata containing the character "Sam" results in retrieval from the server 50 of a male rich content model, when in fact "Sam" refers to a female, then the proofing entity 75 may modify the corresponding portion of the first metadata to refer to a female character rather than a male.

Modification of the first metadata may for example be for filling-in details not discernible from the first metadata or which are not clearly rendered. For example, if the first metadata results in a model of a room, with no colour, then the proofing entity 75 may add further metadata associated with the room metadata to specify a colour, for example:
room -> red room.

Other modifications may be related to one or more of size, speech, clothing, lighting and other descriptors, such as how someone is speaking (e.g. shouting, humming, mumbling, whispering), how vivid a colour is and so on.

Other modifications may comprise character personalisation. Modification may involve adding new metadata to existing metadata, changing existing metadata (e.g. replacing) or removing existing metadata.

For example, the proofing entity 75 may upload one or more personalised characters to the server 50. The personalised characters may be captured using a 3D scanner, or stereoscopic camera, such as Nokia's OZO camera, or similar. The voice of a personalised character may be captured using a similar apparatus, which may be in stereo or spatial audio format, and also uploaded. For example, models of particular actors may be available for selection at the server 50, having been captured in advance. The proofing entity 75 may select one or more models to be used for individual characters in the metadata, for example:
Mr. Smith -> generic male human;
Mrs. Smith -> generic female human;
may be modified to
Mr. Smith -> actor#5;
Mrs. Smith -> actress #3.

Any form of personalised content may be uploaded to the server 50 to provide numerous options for the proofing entity 75, or another user, to refine or personalise the metadata which will affect the rendering of the scenes of the rich content format.

When the proofing entity 75 is satisfied with the previewed rendered rich content, they may commit the new metadata to the associated e-book, which is then stored at the e-library 30, for example, or another network location.

Subsequently, any user downloading the e-book from the e-library 30 or other network location may also download the metadata for rendering the rich content version. For example, the first user 55 associated with the first user terminal may download the e-book and in some embodiments may be given the option of downloading only the text content, or also the metadata for enrichment.

As mentioned previously, the functions of the server 50 may be provided by two or more servers, possibly storing different types of model, and said functions may also be performed by one or more user terminals. References to the server 50 are not intended to be limiting to a particular type of computer.

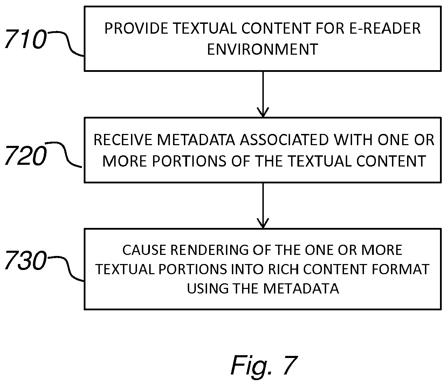

FIG. 7 is a flow diagram showing processing operations of another example embodiment that may be performed in software, hardware, firmware, or a combination thereof to provide the client-end module 60 at the first user terminal 10. It will be appreciated that certain operations may be added, removed or re-ordered. The number of operations is not necessarily indicative of order of processing. It will also be appreciated that functions described in relation to the client-end module 60 may be provided at the second user terminal 70 in terms of rendering the textual content based on the metadata.

A first operation 710 may comprise providing textual content for the e-reader environment, for example an environment that may display text in a text form for an e-book. The providing may comprise received textual content from the e-library 30 or another network location.

A second operation 720 may comprise providing metadata associated with one or more portions of the textual content. The metadata may be the first or new metadata derived in operations described above in relation to FIGS. 5 and 6. The metadata may be received in association with the textual content and received from the e-library 30 or another network location.

A third operation 730 may comprise causing rendering of the one or more textual portions into rich content format using the metadata.

The rendering may be performed by a rendering engine, which may comprise software, hardware, firmware or a combination thereof. Rendering may be based on the type of rendering to be performed, for example video only, audio only, a combination of both, virtual reality rendering and so on. The rendering engine may be associated with dedicated graphics processing hardware. The rendering engine may receive one or more rich content models from the server 50, and may process these to display and in some cases to animate the models. Characteristics of the display and animation of said rich content models may employ at least some of the metadata.

For example, the rendering engine may use natural language processing (NLP) or some other rule-based or machine-learning method to decode metadata indicative of movement or animation. For example, at the metadata generating process described above, the presence of quotation marks in the text may result in metadata as follows for a scene:
For Mr. Smith -> animate mouth & show speech bubble "can you feed the cat?"
   or
For Mr. Smith -> animate mouth & play audio "can you feed the cat?"

The underlined portions of the metadata are decodable by the rendering engine to generate the rendered output using a model of, in this case, Mr Smith, whilst also causing the quoted speech to be displayed or played as audio.

The metadata can be provided in any suitable form, such that it can be decoded by the rendering engine of the client-end module 60 at the first user terminal 10. Any suitable rendering method may be used.

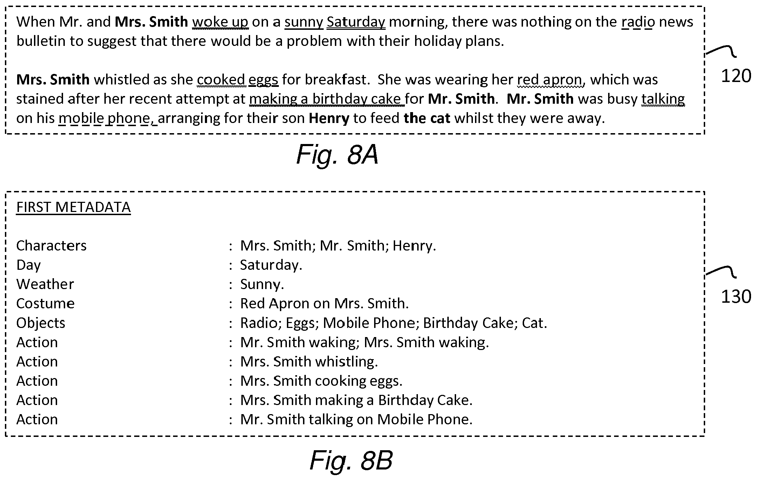

For completeness, FIGS. 8A - 8D shows in graphical form the process of generating and rendering textual content data into metadata and then from metadata into renderable content.

FIG. 8A shows a portion of textual content 120 from the FIG. 1 e-reader terminal.

An initial operation of parsing the textual content based on the above rules is indicated by means of different underlining corresponding to different types of content.

FIG. 8B shows the generated first metadata 130, comprising of three characters, the day, the weather, costumes, objects and actions. This first metadata 130 may be generated automatically.

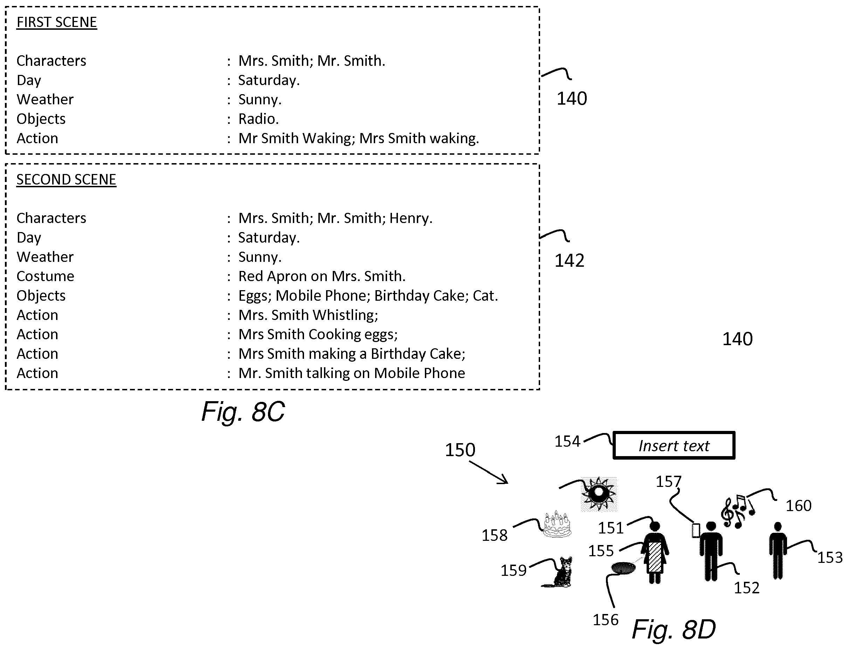

FIG. 8C shows the first metadata 130 organised into first and second scenes 140, 42, which is performed automatically based on the methods described above. The second scene 142 is split from the first scene 140 by virtue of the text being in a separate paragraph. Even had the text been in a single paragraph, the same split would otherwise result because a new character (Henry) makes an appearance in this paragraph.

FIG. 8D shows representative models 150 that may correspond to the first metadata 130 for the second scene 142. These models 150 may be stored and retrieved from the server 50 for animating by the client-end module 60. The retrieved models 150 may comprise the following, corresponding to the first metadata for the second scene 142:

| | | |
|---|---|---|
| Mrs Smith | -> | generic female human 151; |
| Mr Smith | -> | generic male human 152; |
| Henry | -> | generic male human 153; |
| Saturday | -> | caption with text 154; |
| Red Apron | -> | red apron 155; |
| Eggs | -> | generic eggs in pan 156; |
| Mobile Phone | -> | generic mobile phone 157; |
| Birthday Cake | -> | generic cake 158; |
| Cat | -> | generic cat 159; |
| Whistling | -> | generic whistling audio 160. |

etc.

The proofing entity 75 may in some examples change this metadata. For example, the proofing entity 75 may note that the cat is detected in the second scene 142 metadata as an object, but is not actually intended to be present in the scene. Hence, the proofing entity 75 may remove the cat from the metadata. The same may be applied to Henry, who does not actually appear in the second scene.

The proofing entity 75 may in some examples add metadata, for example, to fill-in or change the first metadata. For example, the proofing entity 75 may specify that the landscape or location is a large kitchen and the whistling is audio corresponding to the tune of "happy birthday."

Upon saving the new metadata, comprising the first metadata 130 as updated by the proofing entity 75, the new metadata is made available to end users for rendering at the client-end module 60 to generate the animated scene by retrieving at least some of the models 150 and completing them, e.g. by adding text to the caption 154, and animating them, possibly according to other data in the metadata.

In some embodiments, personalisation is permitted at the client-end module 60. This may comprise any of the above options available to the proofing entity 75, but given that the metadata will generally be hidden from the end-user's e-reader environment, the way in which the end user 55 is permitted to personalise content may be through a different user interface.

For example, the end-user 55 may through a user interface upload one or more personalised characters to the server 50. The personalised characters may be captured using a spatial camera, such as Nokia's OZO camera, or similar. The voice of a personalised character may be captured using a similar apparatus, which may be in stereo or spatial audio format, and also uploaded. For example, models of particular actors may be available for selection at the server 50, having been captured and uploaded in advance. The end-user 55 may select one or more models to be used for individual characters in the metadata. For example, the end-user 55 may capture themselves or one or family members or friends using a spatial camera to generate a virtual reality model of themselves for use in any such rendered version of textual content. For example, the end-user 55 may select a particular pre-selected actor to 'star' as a particular character in the e-book.

In some embodiments, the end-user 55 may have an account registered with the e-library 30 or the server 50 which permits them to store and access a group of personalised characters and/or objects, such as captured versions of themselves and friends or family, with a view to be able to select said characters and/or objects for placement in a rendered version of a current e-book, selection of which may result in replacement of the corresponding metadata generated elsewhere with one or more new portions of metadata which cause rendering of the personalised models in place of generic ones.

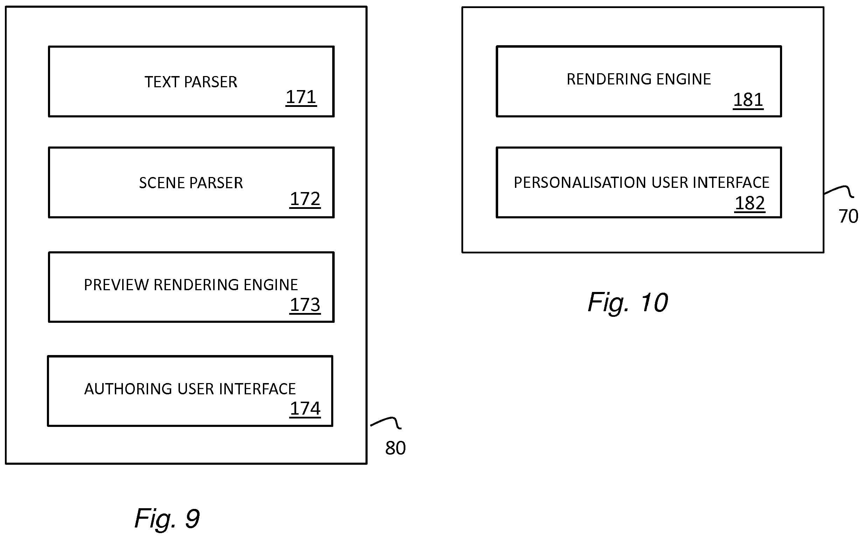

FIG. 9 is a schematic diagram showing functional modules of the metadata generating module 80 according to an example embodiment. A text parser module 172 is for parsing the text to automatically generate first metadata according to rules or a model. A scene parser 172 is for automatically determining distinct scenes and dividing the first metadata accordingly. A preview rendering engine 173 is for providing at least a rendered preview of scenes based on the first metadata, which may be performed on a scene-by-scene basis. An authoring (or proofing) user interface 174 is for enabling modification of parts of the first metadata, for example to delete, add to or change the first metadata based on what has been rendered to permit an author or other person or entity to fill-in or correct details, or to add new details.

FIG. is a schematic diagram showing functional modules of the client-end module 60 according to an example embodiment. A rendering engine 181 is for rendering the e-book text based on the metadata acquired with the e-book, for example by retrieving and animating models from the server 50. A personalisation user interface 182 is for the user to personalise one or more parts of the content to be rendered, for example by making one or more prompted selections and/or selecting captured models stored in association with a user account and retrievable from the server 50 or another network location.

The example embodiments advantageously enable text content to be converted to an enriched format of the text content, such as by creating a playable video and/or audio version of the narrative or story described in the text. This may be useful for users who for a range of reasons may not be able to read the text; for example younger users or users in the process of learning the particular language of the text. Other examples may include users with sight problems that make reading text difficult. In such situations, being able to consume an alternative, richer version of the story carried by the text would be useful.

The example embodiments enable such conversion in such a way that the amount of additional data provided needed is relatively small, thereby offering savings in storage space needed and/or bandwidth.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising:
means providing textual content for output in an e-reader environment;
means receiving metadata associated with one or more portions of the textual content, the metadata defining rendering indications of the associated one or more portions of the textual content; and
means for causing rendering of the one or more textual content portions into rich content format using at least the rendering indications in the metadata.

2. The apparatus of claim 1, further comprising means for retrieving from a remote source one or more rich content models corresponding to the at least some of the metadata for use by the means for causing rendering.

3. The apparatus of claim 1 or claim 2, wherein the textual content corresponds to a document, book or other publication.

4. The apparatus of any preceding claim, wherein the metadata is not viewable with the textual data when viewed in the e-reader environment.

5. The apparatus of claim 4, wherein the metadata describes attributes of one or more features mentioned in the textual data, the feature attributes not being mentioned in the textual data, such that the features, when rendered, have said attributes.

6. The apparatus of any of claims 3 to 5, wherein the metadata describes feature attributes of one or more of characters, objects, locations, scenery, weather, background and actions mentioned in the textual data.

7. The apparatus of any preceding claim, further comprising means for automatically determining a plurality of scenes in the textual content based on the metadata, and wherein the means for causing rendering causes rendering of one or more scenes for presentation to a display of the apparatus.

8. The apparatus of claim 7, further comprising means arranged to permit user modification of the metadata for one or more of the determined scenes by means of user input.

9. The apparatus of claim 8, wherein the user modification means is configured to present a user interface on the apparatus display, the interface enabling modification by means of receiving user selection of one or more features mentioned in the textual data and to modify at least some of the corresponding metadata with personalised metadata so as to provide personalised rich content for the scene when caused to be rendered.

10. The apparatus of claim 8 or claim 9, when dependent on claim 2, further comprising means for creating one or more selectable characters or descriptors by providing captured video and/or audio data to a means for generating a rich content format model from the captured data and for generating corresponding personalised metadata.

11. The apparatus of claim 2 or any claim dependent thereon, wherein the one or more rich content format models comprise one or both of video and audio content.

12. The apparatus of claim 11, wherein one or both of the video and audio content is virtual reality content for output to a virtual reality device.

13. An apparatus according to any preceding claim, further comprising:
means for automatically generating metadata associated with one or more portions of the textual content, the metadata defining rendering indications of the associated portion is to be rendered in a rich content format by an apparatus having an e-reader environment.

14. A method comprising:
providing textual content for output in an e-reader environment;
receiving metadata associated with one or more portions of the textual content, the metadata defining rendering indications of the one or more associated portions of the textual content; and
causing rendering the one or more textual content portions into rich content format using the rendering indications in the metadata.

15. A computer program, optionally stored on a non-transitory computer readable medium program which, when executed by one or more processors of a data processing apparatus, causes the data processing apparatus to carry out a method, comprising
providing textual content for output in an e-reader environment;
receiving metadata associated with one or more portions of the textual content, the metadata defining rendering indications of the one or more associated portions of the textual content; and
causing rendering the one or more textual content portions into rich content format using the rendering indications in the metadata.
